**Europäisches Patentamt**

(19) **European Patent Office**

**Office européen des brevets**

(11) Veröffentlichungsnummer: **0 007 492**

**A1**

(12) ## EUROPÄISCHE PATENTANMELDUNG

(21) Anmeldenummer: **79102298.1**

(22) Anmeldetag: **06.07.79**

(51) Int. Cl.³: **G 01 N 21/03**

(30) Priorität: **28.07.78 DE 2833187**

(43) Veröffentlichungstag der Anmeldung:
**06.02.80 Patentblatt 80/3**

(84) Benannte Vertragsstaaten:
**AT BE CH FR GB NL SE**

(71) Anmelder: **Sarstedt, Walter**
**Kunststoff-Spritzgusswerk**
**D-5223 Nümbrecht/Rommelsdorf(DE)**

(72) Erfinder: **Sarstedt, Walter**

**D-5223 Nümbrecht/Rommelsdorf(DE)**

(74) Vertreter: **Patentanwälte Dipl.-Ing. W.Dahlke Dipl.-Ing.**
**H.-J. Lippert**
**Frankenforster Strasse 137**
**D-5060 Bergisch Gladbach 3(DE)**

(54) **Küvette für optische Untersuchungen kleiner Flüssigkeitsmengen.**

(57) Eine Küvette (112) zur optischen Untersuchung kleiner Flüssigkeitsmengen ist aus einem Boden (116) und vier von diesem ausgehenden Wänden gebildet, von denen zwei gegenüberliegende Wände durchsichtig, eben und parallel zueinander sind undeinen vorbestimmten Abstand voneinander haben. Die anderen beiden Seitenwände (119) besitzen einen geringeren Abstand voneinander, so daß zwischen den vier Seitenwänden ein Raum mit einem schmalen, rechteckigen Querschnitt zur Aufnahme einer kleinen Flüssigkeitsmenge entsteht. Die beiden näher zusammengerückten beiden Seitenwände (119) tragen an ihren Außenseiten je zwei Rippen, die parallel zu den anderen beiden durchsichtigen Seitenwänden verlaufen. Die äußeren Ränder dieser Rippen sind zur Bildung je einer Aufnahmetasche (117) für die Schenkel eines U-förmigen, von unten einzusetzenden Wärmeleitkörpers durch Wände miteinander verbunden. Jede dieser beiden Wände wird von einem schmalen Schlitz (120) durchzogen, der sich in vertikaler Richtung vom unteren Ende der Küvette bis in die Nähe des oberen Endes der Tasche (117) erstreckt und gegenüber der Breite der Wand schmal ist.

Fig.1

EP 0 007 492 A1

## Küvette für optische Untersuchungen kleiner Flüssig-keitsmengen

Die Erfindung betrifft eine Küvette für optische Untersuchungen kleiner Flüssigkeitsmengen, mit einem Boden und vier von diesem ausgehenden Wänden, von denen zwei gegenüberliegende Wände durchsichtig, eben und parallel zueinander ausgebildet und mit ihren Außenseiten in vorbestimmtem Abstand voneinander angeordnet sind, während die beiden anderen Seitenwände zur Verringerung der zur Untersuchung erforderlichen Flüssigkeitsmenge einen geringeren Abstand voneinander haben und an ihren Außenseiten je zwei parallel zu den durchsichtigen Wänden verlaufende Rippen tragen, deren äußere Ränder zur Bildung je einer Aufnahmetasche für die Schenkel eines U-förmigen, von unten einzusetzenden Wärmeleitkörpers durch Wände miteinander verbunden sind.

Ein solcher Wärmeleitkörper soll eine schnelle Vorwärmung der in die Küvette eingefüllten Probe ermöglichen. Zu diesem Zweck wird die Küvette mit eingesetztem Wärmeleitkörper auf eine temperierte Heizplatte gesetzt und auf dieser auf die gewünschte Temperatur vorgewärmt. Die bekannten Wärmeleitkörper

2

dieser Art sind aus Metall hergestellt und besitzen deshalb eine gute Wärmeleitfähigkeit. Die vom Fuße dieses Wärmeleitkörpers aufgenommene Wärme wird auf seine Schenkel übertragen, die sich beiderseits des mit der Probeflüssigkeit gefüllten Raumes der Küvette befinden. Dadurch wird die Flüssigkeit von beiden Seiten schnell vorgewärmt. Der Wärmeleitkörper kann in der Küvette auch während der Messung verbleiben, da die Küvette und die in ihr befindliche Probeflüssigkeit zwischen den Schenkeln des Wärmeleitkörpers in Querrichtung durchleuchtet werden kann.

Aufgrund der vorgegebenen geometrischen Verhältnisse bei derartigen Küvetten, die durch eine Normung auch hinsichtlich der Meßvorrichtungen bedingt sind, ergibt es sich zwangsläufig, daß die beiden langgestreckten Aufnahmetaschen einen sehr schlanken rechteckigen Querschnitt aufweisen, dessen Schmalseite sehr klein im Verhältnis zur Länge der Tasche ist.

Diese geometrischen Verhältnisse führen nun bei der Herstellung der Küvetten, die ja vorzugsweise aus Kunststoff im Spritzgußverfahren hergestellt werden, zu gewissen Schwierigkeiten. Um nämlich den dünnen und langgestreckten Raum jeder Tasche bei der Herstellung der Küvette zu erzeugen, müssen an diesen Stellen in der Spritzform zwei lange, dünne Kerne vorgesehen werden. Diese Kerne sind aber so dünn, daß sie leider nur eine geringe Festigkeit gegen seitliche Verbiegung bzw. Schwingungen haben, wenn der flüssige Kunststoff mit hoher Geschwindigkeit in die Form einschießt. Dabei kann es dann vorkommen, daß sich die Kerne einmal mehr nach innen und einmal mehr nach außen biegen, so daß in der fertigen Küvette die Taschen nicht mehr an der zur Aufnahme des Wärmeleitkörpers vorbestimmten Stelle sitzen und daß außerdem die die Taschen umgebenden Wände verschiedene Stärken haben. Diese verschiedenen Stärken führen wiederum beim Abkühlen der Küvette zu Ungleichmäßigkeiten und möglicherweise Verzerrungen gegenüber der gewünschten Form.

Eine weitere Schwierigkeit tritt bei der Herstellung solcher Küvetten dadurch auf, daß sich die beiden dünnen, langgestreckten Kerne, die für die Erzeugung der beiden Taschen sorgen sollen, durch den einschießenden Kunststoff stark erwärmen und bei hoher Produktionsgeschwindigkeit die vom Kunststoff aufgenommene Wärme nicht mehr schnell genug nach unten an den Hauptkörper der Form abgeben können. Da eine gewisse maximale Temperatur der Teile der Form nicht überschritten werden soll, weil sich sonst Schwierigkeiten beim Entformen ergeben, zwingt die übermäßige Aufheizung besonders der freien Enden der beiden Kerne dazu, die Produktionsgeschwindigkeit, d.h. die Zahl der Schüsse der Spritzgußmaschine pro Minute, herabzusetzen.

Die Einführung von Kühlbohrungen in die beiden Kerne zwecks Kühlung derselben durch eine eingeleitete Kühlflüssigkeit ist infolge der geringen Stärke der Kerne nicht möglich oder doch mit erheblichen Schwierigkeiten verbunden.

Der Erfindung liegt die Aufgabe zugrunde, die vorerwähnten Schwierigkeiten zu beseitigen und die Küvette so auszubilden, daß ihre Herstellung mit erhöhter Produktionsgeschwindigkeit bei gleichzeitig genauer Lage der Taschen und der sie umgebenden Wände möglich ist.

Diese Aufgabe wird erfindungsgemäß dadurch gelöst, daß jede der beiden Wände von einem sich in vertikaler Richtung vom unteren Ende der Küvette bis in die Nähe des oberen Endes der Tasche erstreckenden, gegenüber der Breite der Wand schmalen Schlitz durchzogen ist.

Bei dieser abgewandelten Form der Küvette treten zwar wegen der Schmalheit der beiden Schlitze in den gegenüberliegenden Wänden noch keine Schwierigkeiten beim Einsetzen dieser Küvette in die Aufnahmeschächte der besagten Meßvorrichtungen auf. Die Aufnahmetaschen für die Schenkel eines Wärmeleitkörpers sind auch nach wie vor von Wänden fast vollständig umgeben, so daß die Schenkel des Wärmeleitkörpers eine sichere Aufnahme finden.

Gleichzeitig gestattet aber die Ausbildung der Küvette mit den beiden schmalen Schlitzen eine wesentliche Verbesserung und Beschleunigung der Herstellung der Küvetten. Man kann jetzt nämlich den zur Bildung jeder Aufnahmetasche erforderlichen langgestreckten dünnen Kern durch einen sich über die ganze Länge des Kernes erstreckenden schmalen, aber kurzen Steg mit der Hauptmasse der umgebenden Form verbinden. Dieser Steg stellt einmal eine stabile Verbindung des Kernes mit der umgebenden Formwand dar und verhindert mit Sicherheit seitliche Schwingungen oder Verbiegungen des Kernes. Zum anderen leitet der Steg, der zwar nur schmal, dafür aber auch sehr kurz ist, über seine ganze Länge die im Betrieb vom Kern aufgenommene Wärme in die umgebende Formwand ab.
Damit wird eine Überhitzung des Kernes auch bei hohen
Produktionsgeschwindigkeiten verhindert. Die Praxis hat
gezeigt, daß man die Schußzahl pro Minute bei Anordnung
eines solchen Steges für jeden Kern auf mindestens das
Doppelte erhöhen kann. Die äußere Formwand ist entweder
so dick, daß sie sich auch nach längerem Betrieb nicht
von selbst unzulässig erwärmt, oder sie ist in bekannter
Weise von Kanälen zur Durchleitung einer Kühlflüssigkeit durchzogen.

Die Erfindung wird nachstehend in einem Ausführungsbeispiel anhand der Zeichnung näher erläutert. Dabei
zeigen:

Figur 1    einen Schnitt durch eine erfindungsgemäße Küvette, zugleich einen Schnitt
           längs der Linie I-I in Fig. 2;

Figur 2    eine Seitenansicht der Küvette in Fig. 1
           und

Figur 3    einen vergrößerten Schnitt längs der
           Linie III-III mit teilweise eingezeichneter Spritzform.

Die in der Zeichnung dargestellte Küvette 112 wird
von je zwei gegenüberliegenden Seitenwänden 131 und
zwischen diesen stehenden, durchsichtigen, ebenen und
parallel zueinander verlaufenden Seitenwänden 108 gebildet. Im oberen Teil wird von diesen vier Seitenwänden ein Innenraum 115 quadratischen Querschnittes

6

umgrenzt, der im unteren Teil der Küvette zur Verringerung der zur Untersuchung erforderlichen Flüssigkeitsmenge trichterförmig in einen rechteckigen Innenraum 113 übergeht. Der Übergang erfolgt durch von den Seitenwänden 131 schräg einwärts verlaufende Wände 114, die in die etwa vertikal verlaufenden Wände 119 übergehen. Die vorgenannten Wände 119 stehen nicht genau vertikal, sondern unter einem spitzen Winkel zueinander, so daß einerseits die Entformung der Küvette hinsichtlich des Hohlraumes 113 und andererseits hinsichtlich der beiden Taschen 117 möglich ist. Diese Taschen werden im unteren Teil der Küvette durch die inneren Wände 119 und die äußeren Wände 131 gebildet. Unten sind die Wände 119, die seitlich bis an die Wände 108 heranragen, durch einen Boden 116 abgeschlossen.

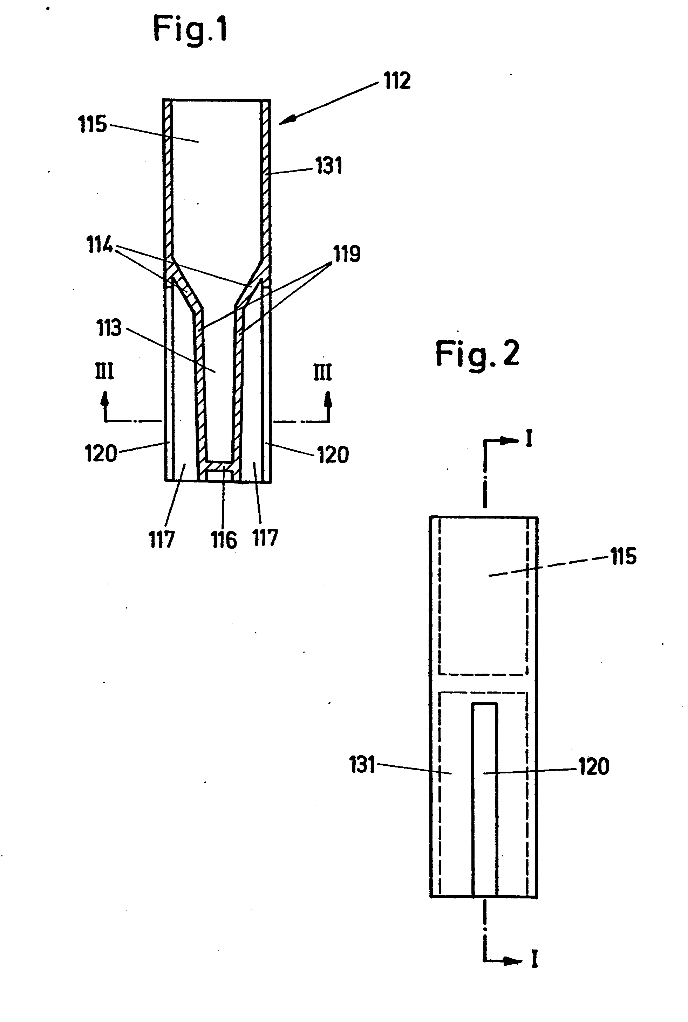

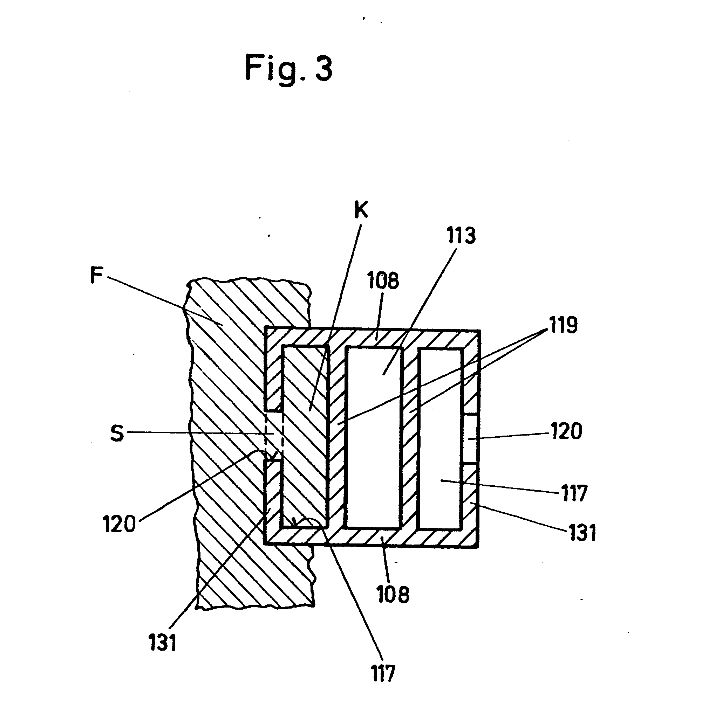

Die unteren Teile der beiden Wände 131, die zusammen mit den inneren Wänden 119 die Aufnahmetaschen 117 für die Schenkel des U-förmigen Wärmeleitkörpers der Küvette bilden, sind, wie insbesondere aus den Fig. 2 und 3 ersichtlich ist, von in Längsrichtung verlaufenden schmalen Schlitzen 120 durchzogen. Diese Schlitze sind gegenüber der Breite der Wände 131 recht schmal gehalten, aber doch noch so breit, daß die Herstellung der Spritzform in der nachstehend beschriebenen Form keine Schwierigkeiten bereitet.

In Fig. 3 ist dargestellt, wie die linke Tasche 117 der Küvette durch einen Kern K in der Form hergestellt wird.

7

Die rechte Tasche 117 wird selbstverständlich durch einen entsprechenden Kern gebildet. Der Kern K ist über einen Steg S mit der umgebenden Formwand F verbunden und erhält von daher seinen Halt und wird gleichzeitig über den Steg von der Formwand F her gekühlt. Die Wärmeabfuhr durch den Steg S ist auch bei der dargestellten schmalen Ausbildung des Steges S und des sich daraus gebenden Schlitzes 120 in der Küvette noch ausreichend. Da nämlich die Stärke der Wand 131 der Küvette nur sehr gering ist, ist die Länge des Steges S, in Richtung vom Kern K auf die Formwand F hin gesehen, ebenso kurz. Infolgedessen tritt praktisch kein Wärmestau in dem Kern K auch bei hoher Produktionsgeschwindigkeit auf, weil die dem Kern zugeführte Wärme durch den Steg S an die umgebende Formwand, die erforderlichenfalls gekühlt wird, abgeführt wird.

Patentanspruch:

Küvette für optische Untersuchungen kleiner Flüssigkeitsmengen, mit einem Boden und vier von diesem ausgehenden Wänden, von denen zwei gegenüberliegende Wände durchsichtig, eben und parallel zueinander ausgebildet und mit ihren Außenseiten in vorbestimmtem Abstand voneinander angeordnet sind, während die beiden anderen Seitenwände zur Verringerung der zur Untersuchung erforderlichen Flüssigkeitsmenge einen geringeren Abstand voneinander haben und an ihren Außenseiten je zwei parallel zu den durchsichtigen Wänden verlaufende Rippen tragen, deren äußere Ränder zur Bildung je einer Aufnahmetasche für die Schenkel eines U-förmigen, von unten einzusetzenden Wärmeleitkörpers durch Wände miteinander verbunden sind,
dadurch gekennzeichnet,
daß jede der beiden Wände (31) von einem sich in vertikaler Richtung vom unteren Ende der Küvette (112) bis in die Nähe des oberen Endes der Tasche (117) erstreckenden, gegenüber der Breite der Wand (31) schmalen Schlitz (120) durchzogen ist.

0007492

1/2

Fig.1

Fig.2

Fig. 3

0007492

<table>
<tr><td colspan="2"></td></tr>
</table>

Europäisches Patentamt

**EUROPÄISCHER RECHERCHENBERICHT**

EP 79 102 298.1

| Kategorie | Kennzeichnung des Dokuments mit Angabe, soweit erforderlich, der maßgeblichen Teile | betrifft Anspruch |
|---|---|---|
| X | DE - U - 7 702 364 (K.F. MÜLLER) <br> * Anspruch 1, 6; Fig. 9 * | 1 |
| P | & DE - A1 - 2 703 427 <br> -- | |
| A | DE - B1 - 2 508 527 (WALTER SARSTEDT KUNSTSTOFF-SPRITZGUSSWERK) <br> * ganzes Dokument * <br> & US - A - 4 021 124 <br> -- | |
| A | DE - A1 - 2 609 482 (H. WELLER) <br> * ganzes Dokument * <br> -- | |
| A | DE - U - 7 638 653 (BRAND) <br> * ganzes Dokument * <br> ---- | |

**EINSCHLÄGIGE DOKUMENTE**

**KLASSIFIKATION DER ANMELDUNG (Int.Cl.3)**

G 01 N 21/03

**RECHERCHIERTE SACHGEBIETE (Int. Cl.3)**

G 01 N 21/03

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 02-11-1979 | SCHWARTZ |

EPA form 1503.1 06.78